# EUROPÄISCHE PATENTSCHRIFT

(11) **EP 3 299 712 B1**
(45) Veröffentlichungstag und Bekanntmachung des Hinweises auf die Patenterteilung: **03.07.2019**
(21) Anmeldenummer: 16190170.7
(22) Anmeldetag: 22.09.2016
(51) Int. Cl.: F21V 23/02, H01F 38/14

(54) **BELEUCHTUNGSANORDNUNG FÜR FLUGHÄFEN, INSBESONDERE EIN UNTERFLURFEUER**
LIGHTING DEVICE FOR AIRFIELDS, IN PARTICULAR A FLUSH LIGHT
SYSTÈME D'ÉCLAIRAGE POUR AÉROPORTS, EN PARTICULIER PLOT LUMINEUX ENCASTRÉ

(43) Veröffentlichungstag der Anmeldung: 28.03.2018
(73) Patentinhaber: Induperm A/S, 4800 Nykøbing Falster (DK)
(72) Erfinder: Hildebrant, Alexander, 59557 Lippstadt (DE); Schönert, Oliver, 59757 Amsberg (DE); Timmer, Maikel, 7483 PG Haaksbergen (NL)
(74) Vertreter: Lohr, Jöstingmeier & Partner

(56) Entgegenhaltungen:
- EP-A1- 1 063 468
- WO-A1-2011/057343
- WO-A1-2014/086497
- WO-A2-01/95349

## Beschreibung

### Technisches Gebiet

Die Erfindung betrifft eine Beleuchtungsanordnung für Flughäfen, insbesondere ein Unterflurfeuer, mit einem mehrteiligen Gehäuse umfassend ein Aufnahmemodul, welches ausgebildet ist zum Aufnehmen eines Energieversorgungsmoduls und/oder eines Leuchtmittels der Beleuchtungsanordnung, umfassend ein Trägermodul, an dem mindestens ein elektrischer Leiter für die Energieversorgung abgestützt ist, und umfassend ein das Energieversorgungsmodul jedenfalls abschnittsweise überdeckendes Abschlussmodul, welches lösbar mit dem Trägermodul verbunden ist, wobei das Energieversorgungsmodul wenigstens eine dem elektrischen Leiter derart zugeordnete Induktionsspule vorsieht, dass während des Betriebs eine Spannung in der mindestens einen Induktionsspule induziert wird zum Betreiben des Leuchtmittels der Beleuchtungsanordnung und wobei als Teil des Energieversorgungsmoduls mindestens ein erster Ferritkern und mindestens ein zweiter Ferritkern vorgesehen sind, welche gemeinsam die Induktionsspule jedenfalls abschnittsweise und den elektrischen Leiter mantelseitig jedenfalls abschnittsweise umgreifen.

### Stand der Technik

Aus der nachveröffentlichten europäischen Patentanmeldung 15 188 082.0 der Anmelderin ist eine gattungsgemäße Beleuchtungsanordnung bekannt mit einem Energieversorgungsmodul, welches ausgebildet ist zur berührungsfreien Energieversorgung der Beleuchtungsanordnung. Insbesondere im rauen Umfeld des Flug-felds hat sich diese Art der Energieversorgung grundsätzlich bewährt, da Wartungs- und Montagearbeiten schnell durchgeführt werden können und das Gesamtsystem bei der Durchführung dieser Arbeiten nicht stromlos geschaltet werden muss.

Die EP 1063 468 betrifft eine Glühbirne und eine Fassung für die Glühbirne. Um eine Korrosion der nach dem Stand der Technik üblichen Kontakte zu vermeiden wird vorgeschlagen im Sockel eine in einem Kunststoffblock vergossene Primärspule eines Transformators anzuordnen und die komplementäre Sekundärspule in einem zweiten Kunststoffblock, der Teil der Glühbirne ist. Sobald die Glühbirne in die Fassung eingesetzt wird, kann eine induktive Energieübertragung zwischen dem Sockel und der Glühbirne erfolgen.

Gegenstand der WO 2011/057343 ist eine Straßenleuchte zur Montage an einem Peitschenmast oder dgl. Dazu hat die Straßenleuchte einen Adapter mit einer Aufnahme für das freie Ende des Mastes und einer Halterung für ein Lampengehäuse. Um auch in explosionsgefährdeten Bereichen die Lampe ggf. im Betrieb zu tauschen, hat der Adapter im Bereich der Halterung eine erste Spule, die mit einer in dem Lampengehäuse angeordneten zweiten Spule induktiv koppelt, d.h. die Energieversorgung der Lampe erfolgt über die transformatorische Kopplung des Adapters mit dem Lampengehäuse.

Um eine LED-Leuchte in explosionsgefährdeten Bereichen einsetzen zu können wird in der WO 2014/086497 A1 vorgeschlagen die entsprechenden LEDs kontaktlos mit einem Vorschaltgerät zu verbinden.

Aus der WO 01/95349 ist es bekannt eine Niederspannungslampe über einen Transformator zu speisen. Bei dem Transformator ist die Sekundärwicklung als Stromschiene ausgeführt, an die die Leuchtmittel angeschlossen werden. Die Stromschiene dient dabei zudem als Kühlkörper für den Transformator.

### Darstellung der Erfindung

Aufgabe der vorliegenden Erfindung ist es, die Montage- und Wartungsfreundlichkeit der Beleuchtungsanordnung weiter zu verbessern.

Zur Lösung der Aufgabe ist die Erfindung in Verbindung mit dem Oberbegriff des Patentanspruchs 1 dadurch gekennzeichnet, dass ein Aufnahmekorb für den ersten Ferritkern und für den zweiten Ferritkern vorgesehen ist, der in einem montierten Zustand der Beleuchtungsanordnung den ersten Ferritkern und den zweiten Ferritkern umgreift und jedenfalls abschnittsweise derart federnd ausgebildet ist, dass der erste Ferritkern und der zweite Ferritkern gegeneinander angedrückt und lösbar verbunden sind.

Der besondere Vorteil der Erfindung besteht darin, dass durch das Vorsehen des Aufnahmekorbs eine besonders effektive Anlage der Ferritkerne aneinander gewährleistet ist und die Energieversorgung wirkungsvoll erfolgen kann. Der Aufnahmekorb, welcher jedenfalls abschnittsweise federn ausgebildet ist, umgreift dabei die Ferritkerne und definiert eine sehr kompakt bauende Einheit. Zur federnden Ausgestaltung des Aufnahmekorbs kann dieser beispielsweise abschnittsweise aus Federstahl ausgebildet sein. Er ist dann einfach zu fertigen, kostengünstig in der Herstellung und langlebig realisiert.

Nach einer bevorzugten Ausführungsform der Erfindung sieht der Aufnahmekorb eine Scheitelunterseite sowie zwei von der Scheitelunterseite zu einer gleichen Seite abragende Seitenflanken vor, welche einander gegenüberliegen. Beispielsweise im Bereich der Scheitelunterseite kann der Aufnahmekorb federnd ausgebildet sein. Durch das Vorsehen der Scheitelunterseite und der zwei von dieser abragenden, einander gegenüberliegenden Seitenflanken ergibt sich eine U-Form, welche in Bezug auf ihre Geometrie so gestaltet ist, dass die Ferritkerne durch die Scheitelunter-seite und die Seitenflanken umgriffen sind. Vorteilhaft ergibt sich ein sicherer Halt für die Ferritkerne in dem Aufnahmekorb. Zugleich ist die konstruktive Gestaltung des Aufnahmekorbs einfach.

Nach einer Weiterbildung der Erfindung ragt von jeder Seitenflanke in Richtung der gegenüberliegenden Seitenflanke wenigstens ein Greifarm ab, wobei der Greifarm der federnd ausgebildeten Scheitelunterseite derart gegenüberliegt, dass die von dem Aufnahmekorb umgriffenen Ferritkerne gegen den Greifarm angedrückt ist. Vorteilhaft ermöglicht es das Vorsehen der Greifarme, die Ferritkerne allseits so zu umgreifen beziehungsweise festzulegen, dass sie sicher gegeneinander angedrückt sind und spielfrei in dem Aufnahmekorb gehalten werden. Zugleich erlaubt das Vorsehen der Greifarme in Verbindung mit der elastischen beziehungsweise federnden Ausgestaltung des Aufnahmekorbs, ebendiesen zur Montage der Ferritkerne elastisch zu verformen und aufzubiegen. Die Montage der Ferritkerne kann demzufolge besonders einfach durchgeführt werden.

Nach einer Weiterbildung der Erfindung sind an dem Aufnahmekorb Rastnasen ausgebildet, die im montierten Zustand der Beleuchtungsanordnung an einer an dem Aufnahmemodul vorgesehenen Einsetzöffnung eingreifen. Für die in den Einsetzöffnungen eingreifenden Rastnasen ist der Aufnahmekorb an dem Aufnahmemodul festgelegt. Vorteilhaft ergibt sich eine kostengünstige Möglichkeit zur Montage des Aufnahmekorbs an dem Aufnahmemodul, wenn die Rastnasen im Bereich der Seitenflanken des Aufnahmekorbs ausgeformt werden. Beispielsweise können die Seitenflanken des Aufnahmekorbs aus Blech gefertigt und die Rastnasen beim Herstellen des Aufnahmekorbs plastisch verformt werden. Eine Festlegung des Aufnahmekorbs an dem Aufnahmemodul erfolgt dann beispielsweise durch Einrasten in die Einsetzöffnung oder die Einsetzöffnungen.

Nach einer Weiterbildung der Erfindung sind an dem zum Abstützen des mindestens einen elektrischen Leiters ausgebildeten Trägermoduls Rastnasen vorgesehen zum Festlegen des Trägermoduls an dem Aufnahmemodul. Beispielsweise greifen die an dem Trägermodul ausgebildeten Rastnasen im montierten Zustand der Beleuchtungsanordnung in die an dem Aufnahmemodul vorgesehenen Einsetzöffnungen ein. Vorteilhaft kann durch die Doppelverwendung der Einsetzöffnung zum Festlegen des Aufnahmekorbs und des Trägermoduls eine besonders kompakte Realisierung des mehrteiligen Gehäuses geschaffen werden und der Bauraumbedarf reduziert sich.

Nach einer Weiterbildung der Erfindung ist an den einander gegenüberliegenden Seitenflanken des Aufnahmekorbs jeweils mindestens eine Spreizkante ausgebildet, welche beim Ansetzen des Abschlussmoduls an das Aufnahmemodul, das heißt im Rahmen der Montage des Gehäuses, mit wenigstens einer an dem Abschlussmodul ausgebildeten ersten Wirkkeilfläche derart zusammenwirkt, dass die gegenüberliegenden Seitenflächen des Aufnahmekorbs mit den daran ausgebildeten Greifhaken elastisch nach außen aufgebogen werden. Vorteilhaft kann im aufgebogenen Zustand des Aufnahmekorbs der erste Ferritkern und/oder der zweite Ferritkern in einfacher Weise in den Aufnahmekorb eingesetzt werden. Insbesondere kann vorgesehen sein, dass wenigstens einer der beiden Ferritkerne und bevorzugt der zweite Ferritkern an dem Abschlussmodul festgelegt ist. Der zweite Ferritkern wird über die Befestigungshaken an dem Abschlussmodul montiert. Danach wird das Abschluss-modul mit dem fixierten zweiten Ferritkern auf den Aufnahmekorb geschoben. Im Zuge dessen hintergreifen die Flanken der Seitenteile den zweiten Ferritkern und sichern im Zusammenwirken mit dem federnden Boden (Scheitelunterseite) den guten magnetischen Fluss über die Ferritkerne.

Nach einer Weiterbildung der Erfindung können die ersten Wirkkeilflächen an dem Abschlussmodul im Bereich von wenigstens zwei Rastarmen ausgebildet sein. Die Rastarme können im montierten Zustand der Beleuchtungsanordnung die an dem Aufnahmekorb gebildeten Spreizkanten derart umgreifen, dass das Abschlussmodul an dem Aufnahmekorb und damit mittelbar auch an dem Anschlussmodul festgelegt ist. Vorteilhaft erhalten die Rastarme durch die erfindungsgemäße Ausgestaltung eine Doppelfunktion. Sie sind dazu ausgebildet, im montierten Zustand der Beleuchtungsanordnung das Abschlussmodul festzulegen. Während der Montage spreizen die Rastarme mit den daran vorgesehenen ersten Wirkkeilflächen den Aufnahmekorb und erlauben so, jedenfalls einen Ferritkern und bevorzugt den an dem Abschlussmodul gehaltenen Ferritkern in den Aufnahmekorb einzusetzen.

Nach einer Weiterbildung der Erfindung sieht der Aufnahmekorb an den einander gegenüberliegenden Seitenflanken stirnseitig jeweils wenigstens zwei Spreizflächen vor, welche im montierten Zustand des Gehäuses einem beweglich angeordneten Öffnungsabschnitt des Abschlussmoduls zugeordnet sind. Der Öffnungsabschnitt des Abschlussmoduls weist wenigstens zwei in dem montierten Zustand der Beleuchtungsanordnung den Spreizflächen zugeordnete zweite Wirkkeilflächen vor. Die Zuordnung ist so ausgebildet, dass durch ein Verschieben des Öffnungsabschnitts die zweiten Wirkkeilflächen gegen die Spreizflächen angedrückt werden und in der Folge die Seitenflächen des Aufnahmekorbs mit den Greifarme derart elastisch nach außen gebogen werden, dass wenigstens der zweite Ferritkern aus dem Aufnahmekorb entnommen beziehungsweise das Abschlussmodul entfernt werden kann. Vorteilhaft ergibt sich durch das Vorsehen der Spreizflächen und dem Zusammenwirken der Spreizflächen mit den zweiten Wirkkeilflächen eine immanente Demontagehilfe. Zur Demontage des Gehäuses der erfindungsgemäßen Beleuchtungsanordnung wird der mindestens eine Öffnungsabschnitt des Gehäuses bewegt, sodass der Aufnahmekorb elastisch aufgebogen wird und das Abschlussmodul beziehungsweise der zweite Ferritkern entfernt werden können. Es sind demzufolge keine Werkzeuge für die Demontage erforderlich. Die Wartung der erfindungs-gemäßen Beleuchtungsanordnung vereinfacht sich weiter und kann besonders schnell und werkzeuglos durchgeführt werden.

Beispielsweise kann vorgesehen sein, dass der Öffnungsabschnitt des Abschlussmoduls über einen elastisch verformbaren und bevorzugt langgestreckt ausgebildeten Verbindungsabschnitts gehalten ist. Der Verbindungsabschnitt ist beispielsweise U-förmig oder mäanderförmig ausgebildet.

Nach einer Weiterbildung der Erfindung kann der erste, von dem Aufnahmekorb umgriffene Ferritkern segmentiert ausgebildet sein. Die Segmente des ersten Ferrit-kerns können stirnseitig aneinander gedrückt sein über eine Mehrzahl von Stützarmen, welche an gegenüberliegenden Stirnseiten des Aufnahmekorbs vorgesehen sind und von den Seitenflanken und/oder der Scheitelunterseite nach innen abragen. Jedenfalls einzelne der abragenden Stützarme sind dabei elastisch ausgebildet beziehungsweise elastisch verformbar, sodass eine Federwirkung zum Andrücken der Ferritkerne bereitgestellt ist.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klar-stellung der Erfindung und haben keinen einschränkenden Charakter.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine perspektivische Gesamtdarstellung der erfindungsgemäßen Beleuchtungsanordnung.
Figur 2 zeigt eine Explosionsdarstellung der Beleuchtungsanordnung mit den wesentlichen Funktionskomponenten eines Gehäuses und eines Energieversorgungsmoduls.
Figur 3 zeigt eine perspektivische Ansicht eines Aufnahmemoduls des Gehäuses.
Figur 4 zeigt eine perspektivische Ansicht eines Aufnahmekorbs des Energieversorgungsmoduls.
Figur 5 zeigt eine Unterseitenansicht des Aufnahmekorbs nach Fig. 4.
Figur 6 zeigt eine Stirnseitenansicht des Aufnahmekorbs nach Fig. 4.
Figur 7 zeigt einen Teilschnitt A-A gemäß Fig. 8 durch das Aufnahmemodul und den Aufnahmekorb.
Figur 8 zeigt die perspektivische Ansicht des Aufnahmemoduls nach Fig. 3 mit dem darin eingesetzten Aufnahmekorb.
Figur 9 zeigt die teilmontierte Beleuchtungsanordnung nach Fig. 7 mit einem segmentiert ausgebildeten ersten Ferritkern in dem Aufnahmekorb.
Figur 10 zeigt ein Trägermodul des Gehäuses in einer perspektivischen Ansicht.
Figur 11 zeigt die teilmontierte Beleuchtungsanordnung nach Fig. 9 mit dem zusätzlich angesetzten Trägermodul.
Figur 12 zeigt einen Schnitt B-B nach Fig. 11.
Figur 13 zeigt eine Innenseitenansicht eines Abschlussmoduls des Gehäuses mit einem hieran festgelegten zweiten Ferritkern des Energieversorgungsmoduls.
Figur 14 zeigt die teilmontierte Beleuchtungsanordnung nach Fig. 11 mit zwei hieran eingesetzten elektrischen Leitern für die Energieversorgung vor der Montage des Abschlussmoduls.
Figur 15 zeigt einen Schnitt durch das mehrteilige Gehäuse und das Energieversorgungsmodul in einem ersten Montageschritt.
Figur 16 zeigt ein Detail X der Darstellung nach Fig. 15.
Figur 17 zeigt das Detail X nach Fig. 15 in einem zweiten Montageschritt.
Figur 18 zeigt eine Unterseitenansicht des Gehäuses der erfindungsgemäßen Beleuchtungsanordnung.
Figur 19 zeigt einen Schnitt C-C nach Fig. 18.
Figur 20 zeigt ein Detail Y der Darstellung nach Fig. 19.
Figur 21 zeigt ein Detail Z der Darstellung nach Fig. 19.
Figur 22 zeigt eine perspektivische Unterseitenansicht des Gehäuses der erfindungs-gemäßen Beleuchtungsanordnung im montierten Zustand.
Figur 23 zeigt eine Seitenansicht des Gehäuses nach Fig. 22.
Figur 24 zeigt einen Teilschnitt D-D durch das Gehäuse nach Fig. 23.
Figur 25 zeigt ein Detail W der Teilschnittdarstellung nach Fig. 24 vor der Demontage des Abschlussmoduls.
Figur 26 zeigt das Detail W während der Demontage.
Figur 27 zeigt das Detail X nach Fig. 15 während der Demontage des Abschlussmoduls und.

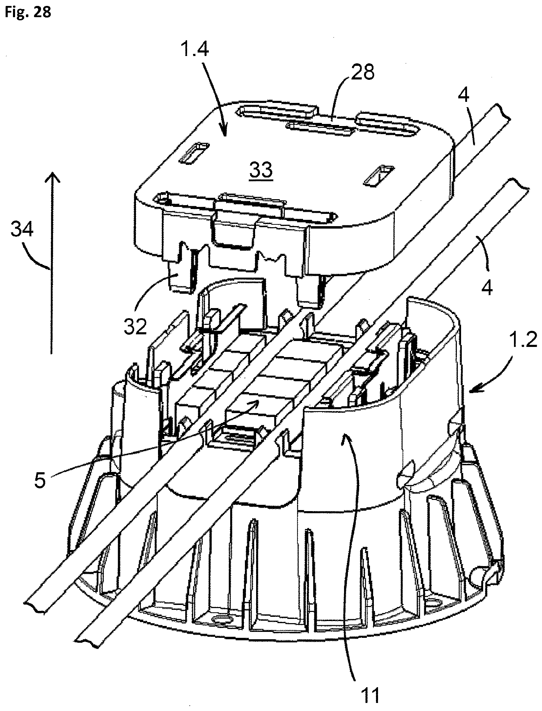

Figur 28 zeigt eine perspektivische Ansicht des Gehäuses mit dem Energieversorgungsmodul bei der Demontage.

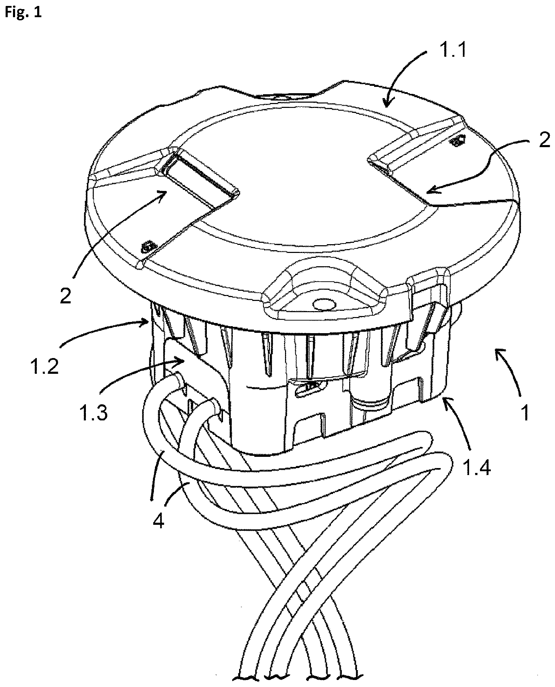

Eine erfindungsgemäße Beleuchtungsanordnung nach Fig. 1 wird typischerweise als Unterflurfeuer auf Flughäfen verwendet. Die Beleuchtungsanordnung sieht ein mehrteiliges Gehäuse 1 mit einem Lichtauslassöffnungen 2 aufweisenden Oberschalenmodul 1.1, mit einem zur Aufnahme der Lichttechnik, der Ansteuerung und eines nicht gezeigten Energieversorgungsmoduls 3 ausgebildeten Aufnahmemodul 1.2, mit einem Trägermodul 1.3, welches ausgebildet ist zum Abstützen von zwei der Beleuchtungsanordnung zugeführten elektrischen Leitern 4 und mit einem Abschlussmodul 1.4, welches an das Aufnahmemodul 1.2 angesetzt ist und das Energieversorgungsmodul 3 jedenfalls abschnittsweise überdeckt.

Bevorzugt sind jedenfalls das Oberschalenmodul 1.1 und das Aufnahmemodul 1.2 des Gehäuses 1 aus einem metallischen Werkstoff hergestellt.

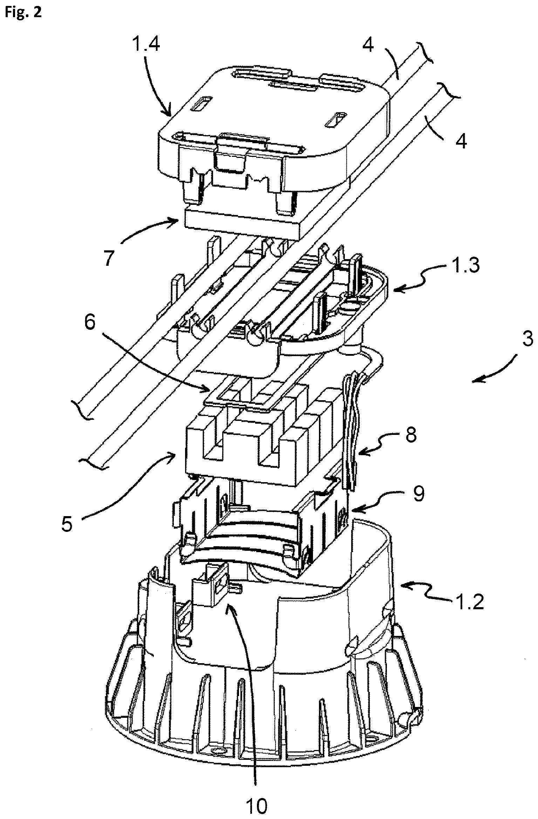

Das Energieversorgungsmodul 3 umfasst als wesentliche Funktionskomponenten wie in Fig. 2 dargestellt einen ersten Ferritkern 5, eine Induktionsspule 6 sowie einen zweiten Ferritkern 7. Der erste Ferritkern 5 ist segmentiert ausgebildet mit exemplarisch vier Ferritkernsegmenten 5.1, 5.2, 5.3, 5.4, welche mit ihren ebenen Seitenflächen aneinander angelegt sind. Der erste Ferritkern 5 weist einen E-förmigen Querschnitt auf, wobei die elektrischen Leiter 4 im montierten Zustand der Beleuchtungs-anordnung in zwei aufgrund der Querschnittsgeometrie des ersten Ferritkerns 5 gebildeten Nuten längsgeführt ist. Ebenfalls ist die Induktionsspule 6, welche über eine Mehrzahl von Drähten 8 mit der Ansteuerung der Beleuchtungsanordnung verbunden ist, abschnittsweise in den Nuten des ersten Ferritkerns 5 geführt. Die Induktionsspule 6 wirkt dabei während des Betriebs der Beleuchtungsanordnung mit den elektrischen Leitern 4 so zusammen, dass eine Spannung in der Induktionsspule 6 induziert wird und mittels der induzierten Spannung wenigstens ein Leuchtmittel der Beleuchtungsanordnung, insbesondere eine Leuchtdiode, betrieben wird.

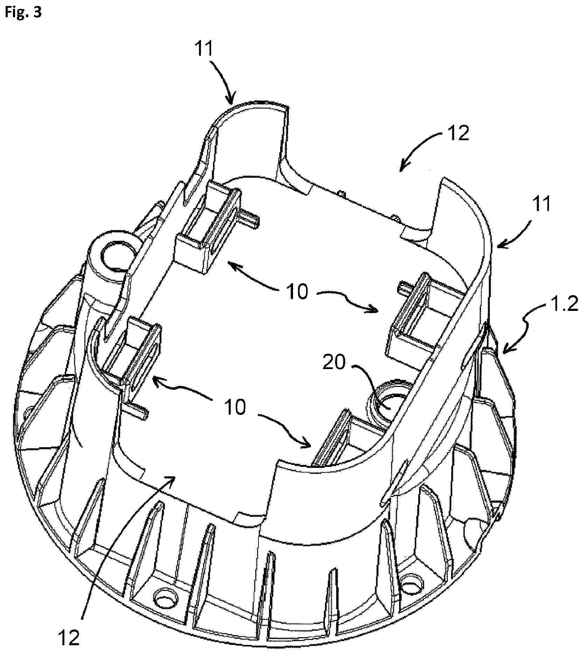

Ferner ist als Teil der erfindungsgemäßen Beleuchtungsanordnung ein Aufnahmekorb 9 vorgesehen, in dem in dem montierten Zustand der Beleuchtungsanordnung der erste Ferritkern 5 und der zweite Ferritkern 7 gehalten sind. Der Aufnahmekorb 9 wird an insgesamt vier an dem Aufnahmemodul 1.2 des Gehäuses 1 gebildeten Einsetzöffnungen 10 festgelegt. Die Einsetzöffnungen 10 sind wie in Fig. 3 im Detail dargestellt einander paarweise gegenüberliegend und paarweise benachbart ausgebildet.

Das Aufnahmemodul 1.2 sieht im Bereich einer zur Aufnahme des Energieversorgungsmoduls 3 ausgebildeten Unterseite eine teilumlaufende Einfassung 11 für den Aufnahmekorb 9 sowie zwei einander gegenüberliegende Ausnehmungen 12 zur Durchführung der elektrischen Leiter 4 vor. An dem Aufnahmemodul 1.2 ist eine Durchlassöffnung 20 ausgebildet.

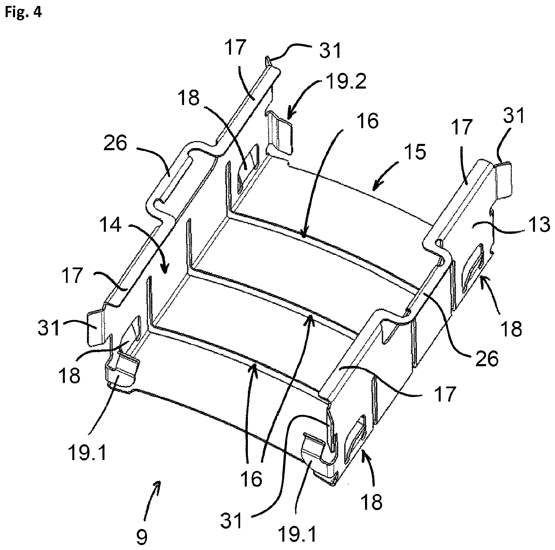

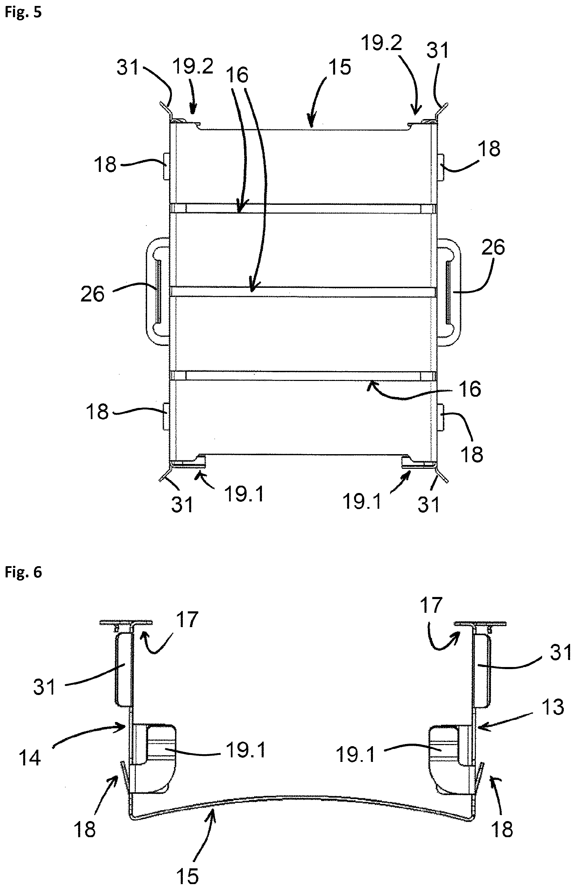

Der Aufnahmekorb 9 ist im Detail in den Fig. 4 bis 6 dargestellt. Er umfasst als geometriebestimmende Komponenten zwei einander gegenüberliegende Seitenflanken 13, 14 sowie eine die Seitenflanken 13, 14 verbindende Scheitelunterseite 15. Die Scheitelunterseite 15 ist federnd ausgebildet. Zur Realisierung der Federwirkung ist die Scheitelunterseite 15 bezogen auf die einander gegenüberliegenden Seitenflanken 13, 14, und eine im Querschnitt durch die Seitenflanken 13, 14 und die Scheitelunterseite 15 definierte U-Form konkav nach innen gekrümmt. Zusätzlich sind entsprechend einer Breite der Ferritkernsegmente 5.1, 5.2, 5.3, 5.4 beabstandet jeweils von den gegenüberliegenden Seitenflanken 13, 14 ausgehende und im Bereich der Scheitelunterseite 15 erstreckte Nuten 16 vorgesehen, durch die die federnd ausgebildete Scheitelunterseite 15 funktional segmentiert wird.

Von jeder Seitenflanke 13, 14 ragen in Richtung der gegenüberliegenden Seitenflanke 13, 14 randseitig zwei Greifarme 17 ab. Die Greifarme 17 liegen der Scheitelunterseite 15 derart gegenüber, dass die im montierten Zustand der Beleuchtungsanordnung an dem Aufnahmekorb 9 umgriffenen Ferritkerne 5, 7 von der federnd ausgebildeten Scheitelunterseite 15 gegen die gegenüberliegenden Greifarme 17 angedrückt und gehalten sind.

An dem Aufnahmekorb 9 sind im Bereich der Seitenflanken 13, 14 insgesamt vier Rastnasen 18 ausgebildet. Die Rastnasen 18 sind als konturierte Blechsegmente so elastisch verformbar und bezogen auf die an dem Aufnahmemodul 1.2 gebildeten Einsetzöffnungen 10 so positioniert, dass der Aufnahmekorb 9 nach dem Einsetzen in das Aufnahmemodul 1.2 an diesem festgelegt werden kann, indem die Rastnasen 18 bezogen auf die einander gegenüberliegenden Seitenflanken 13, 14 in die Einsetzöffnungen 10 des Aufnahmemoduls 1.2 eingreifen. An dem Aufnahmekorb 9 sind des Weiteren insgesamt vier an gegenüberliegenden Stirnseiten nach innen abragende Stützarme 19.1, 19.2 angeordnet. An dem Aufnahmekorb 9 sind randseitig und einander gegenüberliegend an den Seitenflanken 13, 14 Spreizkanten 26 zwischen den einander zugeordneten Greifarmen 17 realisiert. Der Aufnahmekorb 9 hat an den einander gegenüberliegenden Seitenflanken 13, 14 stirnseitig jeweils wenigstens zwei Spreizflächen 31.

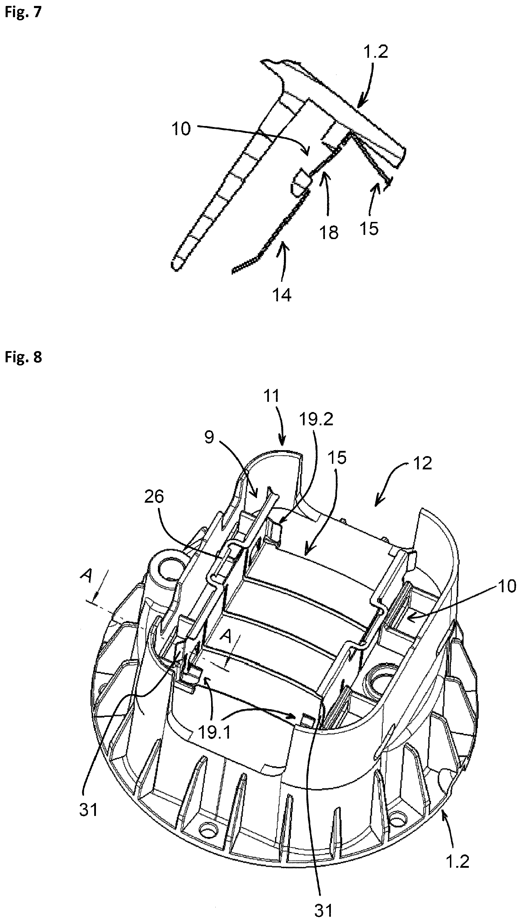

Die entsprechende Montagesituation ist in den Fig. 7 und 8 dargestellt. Figur 7 zeigt einen Teilschnitt A-A gemäß Fig. 8 durch das Aufnahmemodul und den Aufnahmekorb. An dem Aufnahmekorb 9 sind des Weiteren insgesamt vier an gegenüberliegenden Stirnseiten nach innen abragende Stützarme 19.1, 19.2 zum Positionieren beziehungsweise Fixieren der Segmente 5.1, 5.2, 5.3, 5.4 des ersten Ferritkerns 5 vorgesehen. Zwei erste Stützarme 19.1 sind dabei elastisch verformbar beziehungsweise federnd ausgebildet. Die erste Stützarme 19.1 dienen dazu, die Segmente 5.1, 5.2, 5.3, 5.4 des ersten Ferritkerns 5 mit den ebenen Seitenflächen aneinander anzudrücken. Zwei zweite Stützarme 19.2 sind exemplarisch nach Art eines Anschlags ausgebildet.

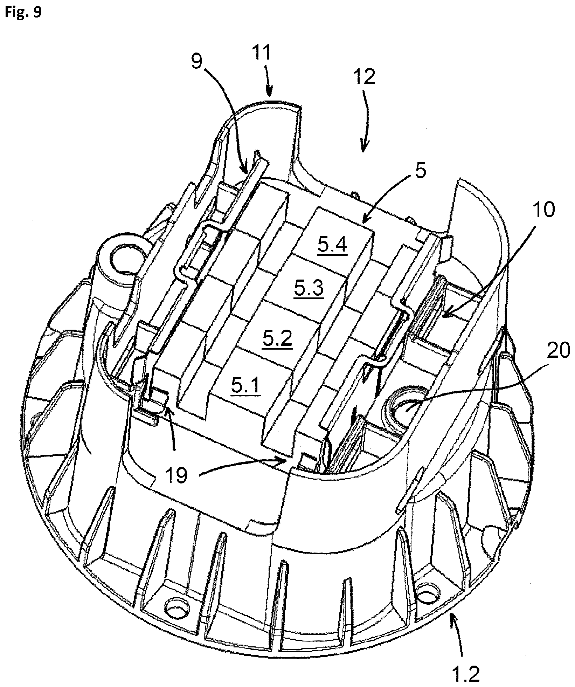

Fig. 9 zeigt die Lage der Segmente 5.1, 5.2, 5.3, 5.4 in dem Aufnahmekorb 9, welcher in das Aufnahmemodul 1.2 des Gehäuses 1 eingesetzt ist.

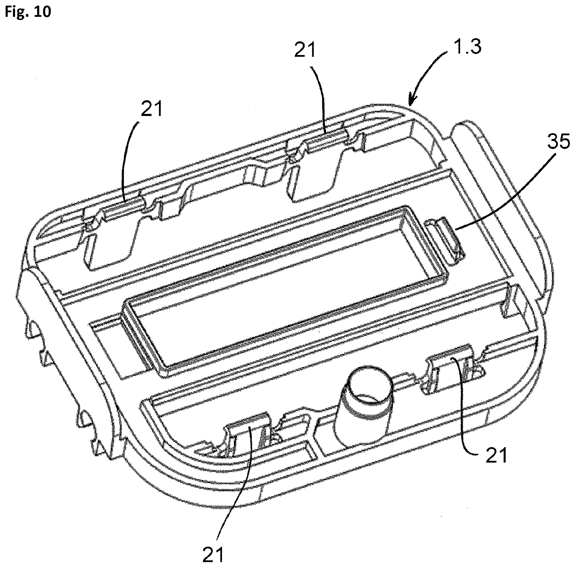

Eine perspektivische Ansicht des Trägermoduls 1.3 ist in Fig. 10 dargestellt. Die Festlegung des Trägermoduls 1.3 an dem Aufnahmemodul 1.2 erfolgt über insgesamt vier Rasthaken 21. Zusätzlich sind an dem Trägermodul 1.3 Rastnasen 35 vorgesehen.

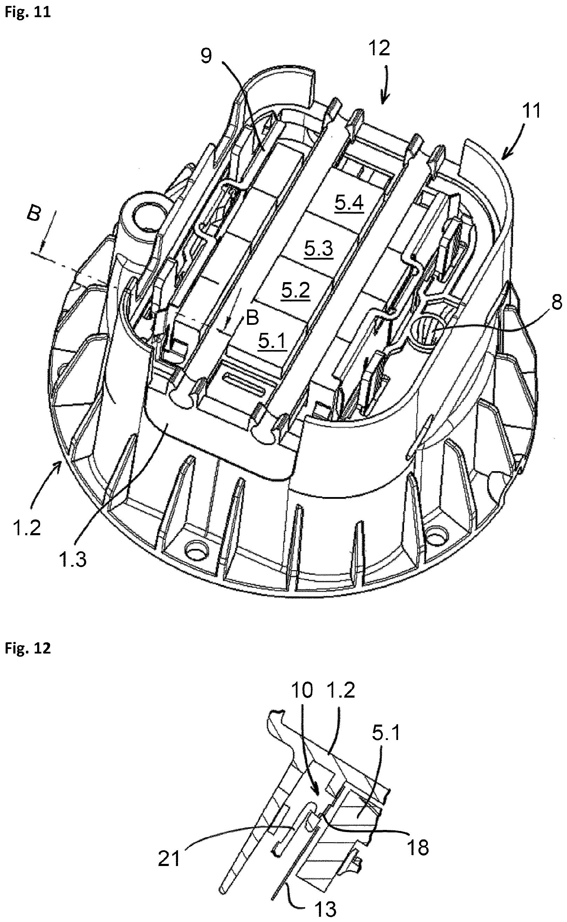

Fig. 11 zeigt die teilmontierte Beleuchtungsanordnung nach Fig. 9, in welche zusätzlich das Trägermodul 1.3 eingesetzt ist. Montiert ist zusätzlich die von dem Trägermodul 1.3 überdeckte Induktionsspule 6 mit den Drähten 8, welche durch eine an dem Aufnahmemodul 1.2 ausgebildete Durchlassöffnung 20 der Ansteuerung der Beleuchtungsanordnung zugeführt ist.

Fig. 12 zeigt einen Schnitt B-B nach Fig. 11. Fig. 12 zeigt die Rasthaken 21, die in die an dem Aufnahmemodul 1.2 ausgebildeten Einsetzöffnungen 10 eingreifen. Die Einsetzöffnungen 10 des Aufnahmemoduls 1.2 dienen insofern zugleich zum Festlegen des Aufnahmekorbs 9 und des Trägermoduls 1.3 an dem Aufnahmemodul 1.2.

An dem Trägermodul 1.3 sind Rastnasen 35 vorgesehen, vgl. Fig. 10. Die Rastnasen 35 dienen der Festlegung der Induktionsspule 6 an dem Trägermodul 1.3.

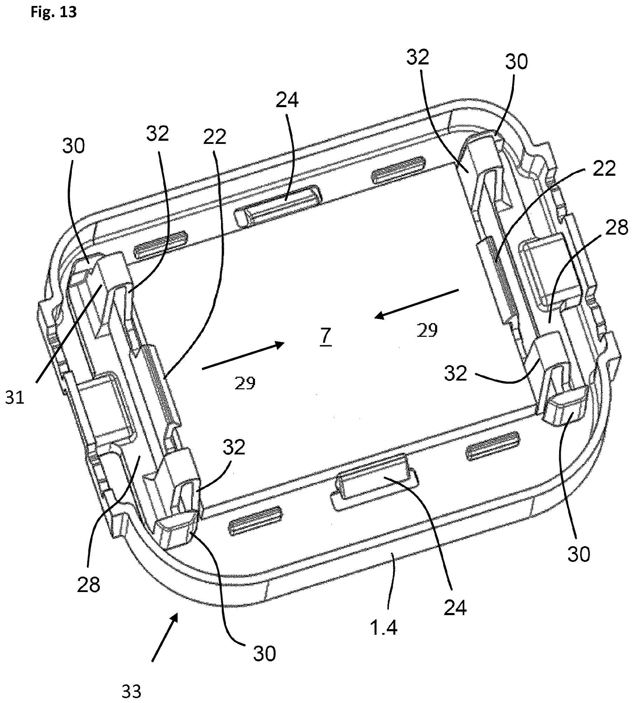

Fig. 13 zeigt das Abschlussmodul 1.4 des Gehäuses 1 in einer perspektivischen Innenseitenansicht sowie den zweiten Ferritkern 7, welcher in dem Abschlussmodul 1.4 festgelegt ist. Zur Festlegung des zweiten Ferritkerns 7 in dem Abschlussmodul 1.4 sind an dem Abschlussmodul 1.4 weitere Rasthaken 22 ausgebildet, welche den zweiten Ferritkern 7 mantelseitig abschnittsweise umgreifen.

Als Teil des Abschlussmoduls 1.4 sind ebenfalls Öffnungsabschnitte 28 vorgesehen, die mittels eines verformbaren Verbindungsabschnitts 32 elastisch an einer Grundplatte 33 des Abschlussmoduls 1.4 befestigt sind. Die Verbindungsabschnitte 32 weisen Spreizflächen 31 auf. Der Verbindungsabschnitt 32 sorgt für eine im Wesentlichen lineare Verschiebbarkeit in eine Betätigungsrichtung 29. Die Öffnungsabschnitte 28 haben seitlich jeweils Wirkkeilflächen 30, welche bei der Demontage mit den Spreizflächen 31 des Aufnahmemoduls 1.2 zusammenwirken.

An dem Abschlussmodul 1.2 sind zwei sich gegenüberliegende Rastnasen 24 vorgesehen, welche mit den Greifarmen 17 an deren Spreizkanten 26 wirken.

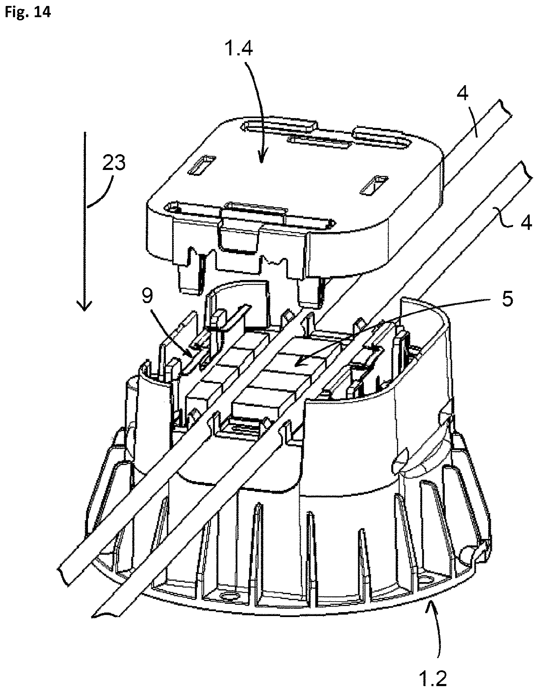

Eine Montagesituation für die erfindungsgemäße Beleuchtungsanordnung ist in Fig. 14 dargestellt. Hierbei sind in die teilmontierte Beleuchtungsanordnung nach Fig. 11 zusätzlich die elektrischen Leiter 4 eingesetzt. Anschließend wird das Abschlussmodul 1.4 mit dem innenliegenden zweiten Ferritkern 7 in die durch den Pfeil dargestellte Montagerichtung 23 an das Aufnahmemodul 1.2 des Gehäuses 1 angesetzt.

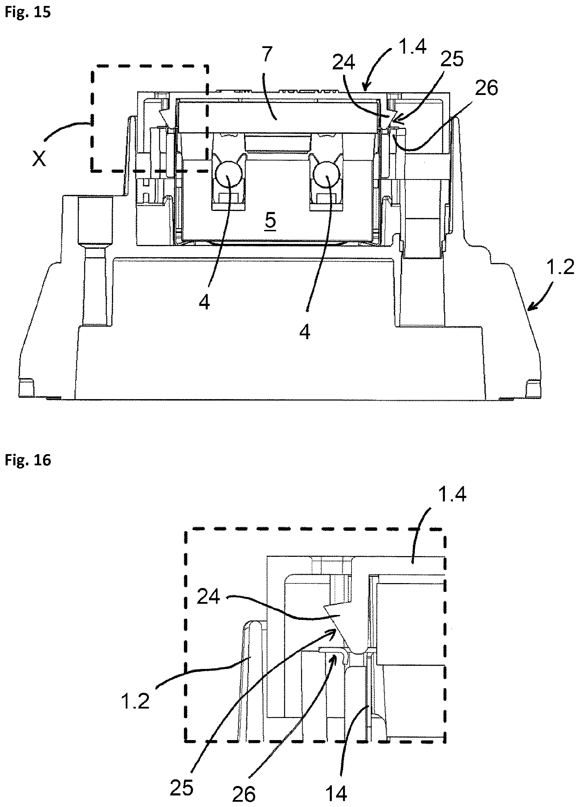

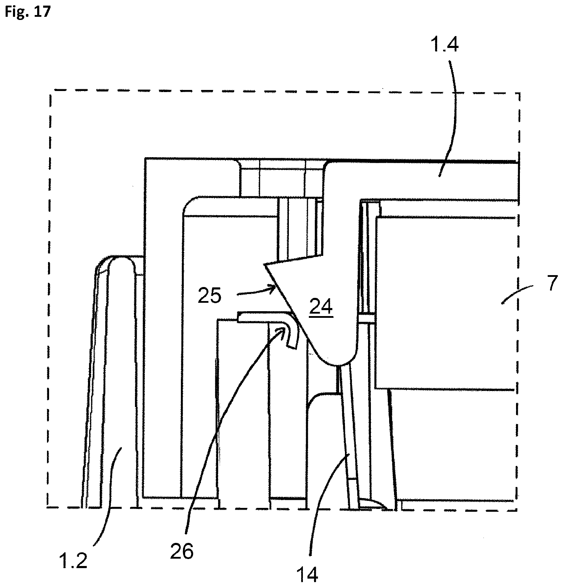

Eine Schnittdarstellung dieser Montagesituation ist in den Fig. 15 und 16 gezeigt. Es ist hierbei so, dass an dem Abschlussmodul 1.4 die zwei Rastarme 24 gebildet sind mit einander gegenüberliegenden ersten Wirkkeilflächen 25. Beim Ansetzen des Abschlussmoduls 1.4 an das Aufnahmemodul 1.2 des Gehäuses 1 wird der Aufnahmekorb 9 im Bereich der gegenüberliegenden Seitenflanken 13, 14 durch den Kontakt mit den ersten Wirkkeilflächen 25 elastisch verformt und nach außen aufgebogen. Die ersten Wirkkeilflächen 25 wirken hierbei mit an den Aufnahmekorb 9 gebildeten Spreizkanten 26 zusammen. Die Spreizkanten 26 sind dabei an dem Aufnahmekorb 9 randseitig und einander gegenüberliegend an den Seitenflanken 13, 14 zwischen den einander zugeordneten Greifarmen 17 realisiert. Ein Zwischen-schritt der Montage, in dem der Aufnahmekorb 9 im Bereich der gegenüberliegenden Seitenflanken 13, 14 teilweise aufgebogen ist, ist in Fig. 17 gezeigt.

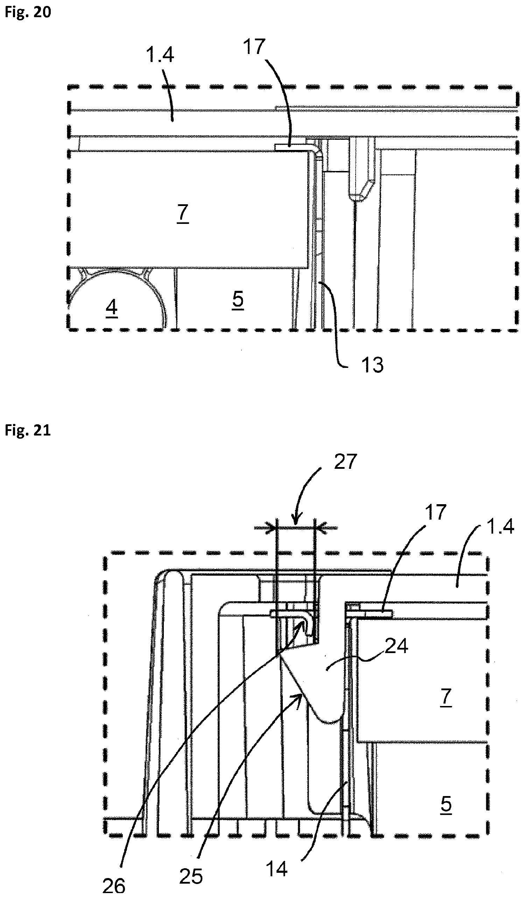

Im montierten Zustand nach Fig. 21 sind die während der Montage elastisch nach außen verformten Seitenflanken 13, 14 zurück in der Ausgangskonfiguration und die Rastarme 24 des Abschlussmoduls 1.4 umgreifen den Aufnahmekorb 9 im Bereich der Spreizkante 26.

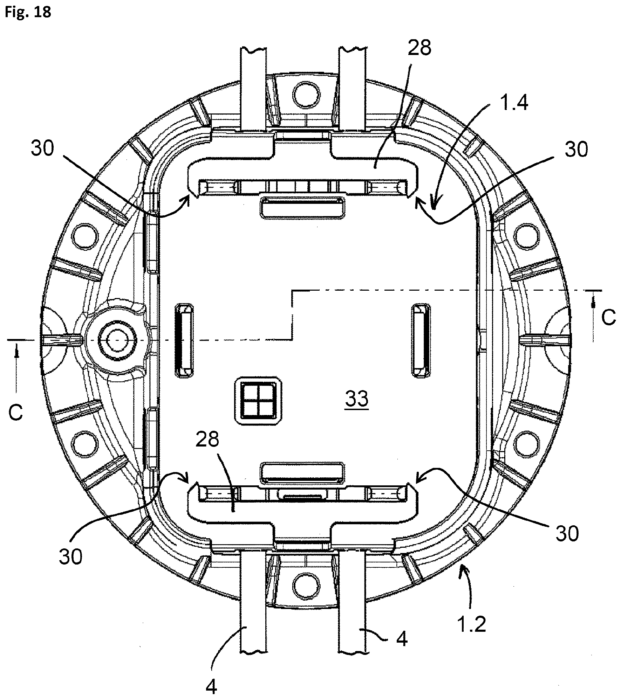

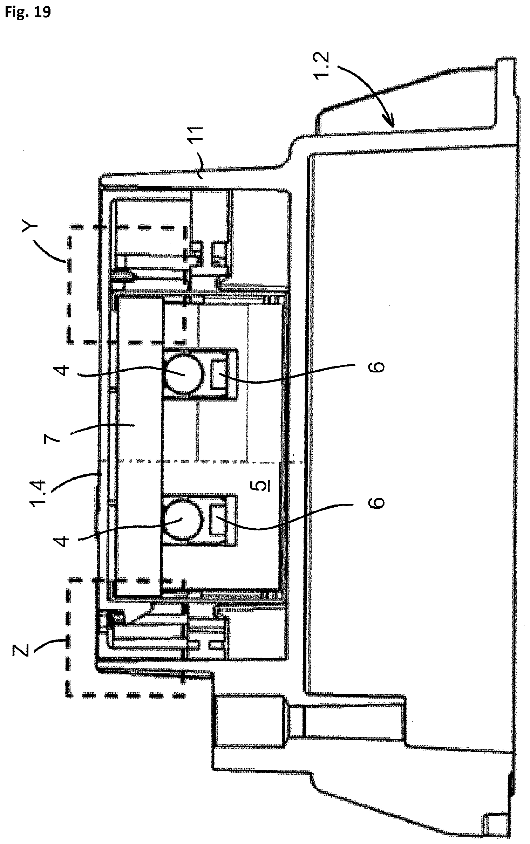

Eine Unterseitenansicht auf das an das Aufnahmemodul 1.2 angesetzte Abschlussmodul 1.4 ist in Fig. 18 dargestellt. In einem Schnitt C-C nach Fig. 19 und den zwei Detailvergrößerungen nach den Fig. 20 und 21 ist gezeigt, wie der zweite Ferrit-kern 7 von der elastisch beziehungsweise federnd ausgebildeten Scheitelunterseite 15 gegen den ersten Ferritkern 5 an den zweiten Ferritkern 7 und die Greifhaken 17 des Aufnahmekorbs 9 angedrückt werden. Eine flächige und feste Anlage der Ferrit-kerne 5, 7 aneinander ist auf diese Weise stets gewährleistet. Zugleich ergibt sich durch den Hinterschnitt 27, welcher zwischen den Rastarmen 24 und der ersten Spreizfläche 26 gebildet ist, ein sicherer Halt auch dann, wenn beispielsweise äußere Störeinflüsse wirken oder die als Unterflurfeuer verwendete Beleuchtungsanordnung von schwerem Gerät überfahren wird.

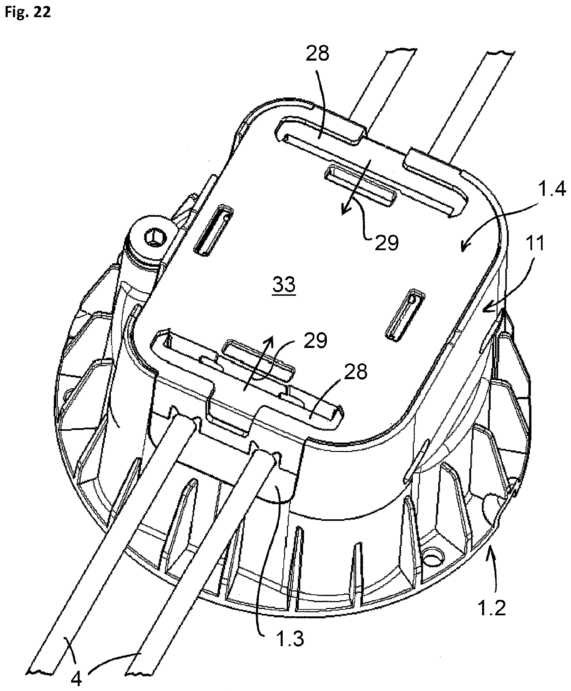

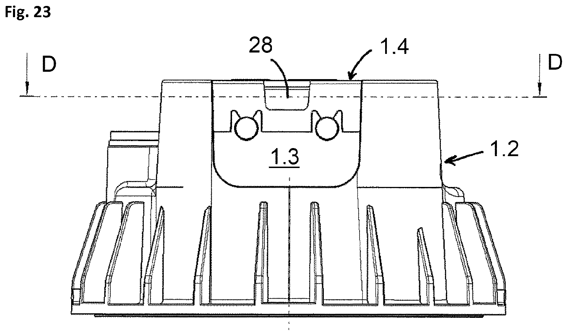

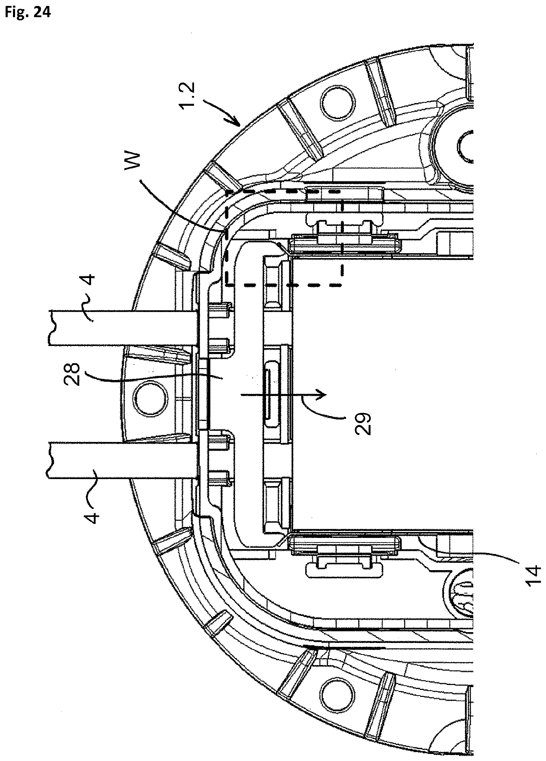

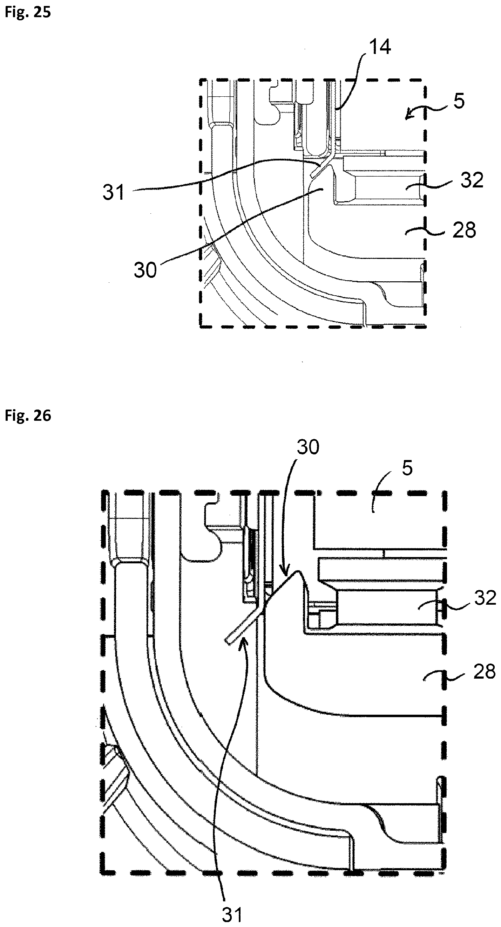

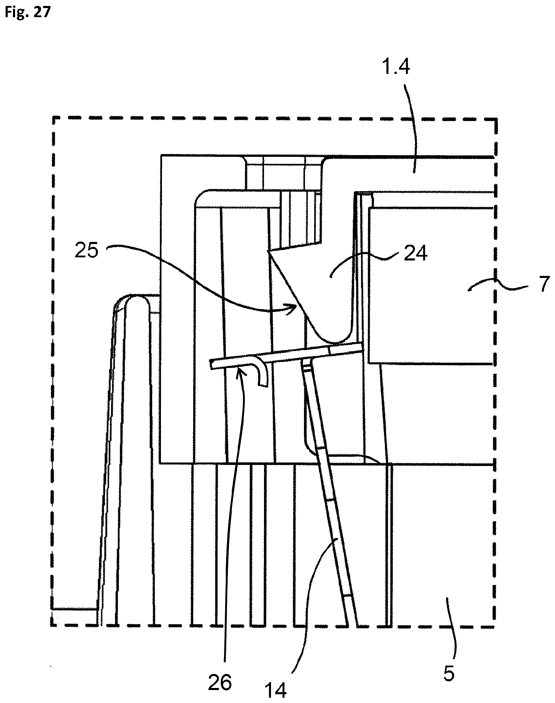

Eine Demontage des Abschlussmoduls 1.4 beispielsweise zu Wartungszwecken an dem Energieversorgungsmodul 3 erfolgt werkzeuglos, indem der an dem Abschlussmodul 1.4 gebildete Öffnungsabschnitt 28 in die Betätigungsrichtung 29 bewegt wird, vergleiche Fig. 22. Es ist hierbei so, dass die an dem Öffnungsabschnitt 28 gebildete Wirkkeilfläche 30 in Eingriff gebracht wird und mit der stirnseitig im Bereich der Seitenflanken 13, 14 an dem Aufnahmekorb 9 gebildeten Spreizfläche 31 zusammenwirkt. Die Seitenflanken 13, 14 werden elastisch verformt und nach außen aufgebogen. Figur 24 zeigt einen Teilschnitt D-D durch das Gehäuse nach Fig. 23. Fig. 24 und 25 zeigen insofern die Ausgangskonfiguration vor dem Betätigen des Öffnungsabschnitts 28. Fig. 26 zeigt die Lage des Öffnungsabschnitts 28 nach der Betätigung. In Fig. 27 ist dargestellt, in welchem Maße die Seitenflanken 13, 14 nach der Betätigung des Öffnungsabschnitts 28 nach außen verformt sind. Die Verformung ist jedenfalls so bemessen, dass der Hinterschnitt 27 (vgl. Fig. 21 und 27) aufgehoben ist und das Abschlussmodul 1.4 mit dem zweiten Ferritkern 7 in die Demontagerichtung 34 abgenommen werden kann. Die relative Beweglichkeit des Öffnungsabschnitts 28 ist hierbei realisiert über den Verformungsabschnitt 32 des Abschlussmodul 1.4. Der Verformungsabschnitt 32 ist aufgrund seiner langgestreckten, U-förmigen Gestalt elastisch verformbar in Bezug zu der Grundplatte 33 des Abschlussmoduls 1.4 an ebendieser festgelegt.

### Bezugszeichenliste

- 1: Gehäuse
- 1.1: Oberschalenmodul
- 1.2: Aufnahmemodul
- 1.3: Trägermodul
- 1.4: Abschlussmodul
- 2: Lichtauslassöffnung
- 3: Energieversorgungsmodul
- 4: elektrischer Leiter
- 5: erster Ferritkern
- 5.1: Ferritkernsegment
- 5.2: Ferritkernsegment
- 5.3: Ferritkernsegment
- 5.4: Ferritkernsegment
- 6: Induktionsspule
- 7: zweiter Ferritkern
- 8: Draht
- 9: Aufnahmekorb
- 10: Einsetzöffnung
- 11: Einfassung
- 12: Ausnehmung
- 13: Seitenflanke
- 14: Seitenflanke
- 15: Scheitelunterseite
- 16: Nut
- 17: Greifarm
- 18: Rastnase
- 19.1: erster Stützarm
- 19.2: zweiter Stützarm
- 20: Durchlassöffnung
- 21: Rasthaken
- 22: weiterer Rasthaken
- 23: Montagerichtung
- 24: Rastarm
- 25: erste Wirkkeilfläche
- 26: Spreizkante
- 27: Hinterschnitt
- 28: Öffnungsabschnitt
- 29: Betätigungsrichtung
- 30: zweite Wirkkeilfläche
- 31: Spreizfläche
- 32: Verbindungsabschnitt
- 33: Grundplatte
- 34: Demontagerichtung
- 35: Rastnase
- A-A: Schnittebene
- B-B: Schnittebene
- C-C: Schnittebene
- D-D: Schnittebene
- W: Detail
- X: Detail
- Y: Detail
- Z: Detail

## Patentansprüche

1. Beleuchtungsanordnung für Flughäfen, insbesondere ein Unterflurfeuer, mit einem mehrteiligen Gehäuse (1) umfassend,
- ein Aufnahmemodul (1.2), welches ausgebildet ist zum Aufnehmen eines Energieversorgungsmoduls (3) und/oder eines Leuchtmittels,
- ein Trägermodul (1.3) und
- ein das Energieversorgungsmodul (3) jedenfalls abschnittsweise überdeckendes Abschlussmodul (1.4), welches lösbar mit dem Trägermodul (1.3) verbunden ist,
wobei das Energieversorgungsmodul (3) wenigstens eine Induktionsspule (6) vorsieht, welche dem elektrischen Leiter (4) derart zugeordnet ist, dass während des Betriebs eine Spannung in der Induktionsspule (6) induziert wird zum Betreiben eines Leuchtmittels der Beleuchtungsanordnung, und wobei als Teil des Energieversorgungsmoduls (3) mindestens ein erster Ferritkern (5) und mindestens ein zweiter Ferritkern (7) vorgesehen sind, welche gemeinsam die Induktionsspule (5) jedenfalls abschnittsweise und einen elektrischen Leiter (4) für die Energieversorgung mantelseitig mindestens abschnittsweise umgreifen, **dadurch gekennzeichnet, dass** ein Aufnahmekorb (9) für den ersten Ferritkern (5) und für den zweiten Ferritkern (7) vorgesehen ist, der in einem montierten Zustand der Beleuchtungsanordnung den ersten Ferritkern (5) und den zweiten Ferritkern (7) umgreift und jedenfalls abschnittsweise derart federnd ausgebildet ist, dass der erste Ferritkern (5) und der zweite Ferritkern (7) gegeneinander angedrückt und lösbar verbunden sind.

2. Beleuchtungsanordnung nach Anspruch 1, **dadurch gekennzeichnet, dass** der Aufnahmekorb (9) U-förmig ausgebildet ist in Bezug auf zwei einander gegenüberliegende Seitenflanken (13, 14) und eine die Seitenflanken (13, 14) verbindende Scheitelunterseite (15), welche federnd ausgebildet ist.

3. Beleuchtungsanordnung nach Anspruch 2, **dadurch gekennzeichnet, dass** von jeder Seitenflanke (13, 14) in Richtung der gegenüberliegenden Seitenflanke (13, 14) wenigstens ein Greifarm (17) abragt, wobei die Greifarme (17) der federnd ausgebildeten Scheitelunterseite (15) derart gegenüberliegen, dass die von dem Aufnahmekorb (9) umgriffenen Ferritkerne (5, 7) von der federnd ausgebildeten Scheitelunterseite (15) gegen die gegenüberliegen-den Greifarme (17) angedrückt sind.

4. Beleuchtungsanordnung nach einem der Ansprüche 1 bis 3, **dadurch gekennzeichnet, dass** an dem Aufnahmekorb (9) Rastnasen (18) ausgebildet sind, die im montierten Zustand der Beleuchtungsanordnung in eine an dem Aufnahmemodul (1.2) vorgesehene Einsetzöffnung (10) eingreifen zum Fest-legen des Aufnahmekorbs (9) an dem Aufnahmemodul (1.2).

5. Beleuchtungsanordnung nach Anspruch 4, **dadurch gekennzeichnet, dass** an dem Trägermodul (1.3) Rasthaken (21) vorgesehen sind, welche im montierten Zustand in die an dem Aufnahmemodul (1.2) vorgesehenen Einsetzöffnungen (10) eingreifen zum Festlegen des Trägermoduls (1.3) an dem Aufnahmemodul (1.2).

6. Beleuchtungsanordnung nach einem der Ansprüche 1 bis 5, **dadurch gekennzeichnet, dass** der zweite Ferritkern (7) von dem Abschlussmodul (1.4) gehalten ist.

7. Beleuchtungsanordnung nach Anspruch 6, **dadurch gekennzeichnet, dass** an den Seitenflanken (13, 14) des Aufnahmekorbs (9) jeweils mindestens eine Spreizkante (26) ausgebildet ist, welche beim Ansetzen des Abschlussmoduls (1.4) an das Aufnahmemodul (1.2) mit an dem Abschlussmodul (1.4) gebildeten ersten Wirkkeilflächen (25) derart zusammenwirken, dass die gegenüberliegenden Seitenflächen mit den daran ausgebildeten Greifhaken elastisch nach außen aufgebogen werden zum Einsetzen des an dem Abschlussmodul (1.4) gehaltenen zweiten Ferritkerns (7) in den Aufnahmekorb (9).

8. Beleuchtungsanordnung nach Anspruch 7, **dadurch gekennzeichnet, dass** das Abschlussmodul (1.4) wenigstens zwei Rastarme (24) aufweist, an denen die ersten Wirkkeilflächen (25) gebildet ist, und dass die Rastarme (24) in dem montierten Zustand der Beleuchtungsanordnung die an dem Aufnahmekorb (9) gebildeten Spreizkanten (26) derart umgreifen, dass das Abschlussmodul (1.4) an dem Aufnahmekorb (9) und damit mittelbar an dem Aufnahmemodul (1.2) festgelegt ist.

9. Beleuchtungsanordnung nach einem der Ansprüche 2 bis 8, **dadurch gekennzeichnet, dass** an den einander gegenüberliegenden Seitenflanken (13, 14) stirnseitig jeweils wenigstens eine Spreizfläche (31) vorgesehen ist, welche in dem montierten Zustand der Beleuchtungsanordnung einem beweglich angeordneten Öffnungsabschnitt (28) des Abschlussmoduls (1.4) zugeordnet sind, und dass der Öffnungsabschnitt (28) jeweils wenigstens eine der Spreizfläche (31) zugeordnete zweite Wirkkeilfläche vorsieht derart, dass durch ein Verschieben des Öffnungsabschnitts (28) die zweite Wirkkeilfläche (30) gegen die Spreizfläche (31) angedrückt wird und die Seitenflanken (13, 14) des Aufnahmekorbs (9) mit den Greifarmen (17) derart elastisch nach außen aufgebogen werden, dass wenigstens der zweite Ferritkern (7) und/oder das Abschlussmodul (1.4) aus dem Aufnahmekorb (9) entnommen werden können.

10. Beleuchtungsanordnung nach Anspruch 9, **dadurch gekennzeichnet, dass** der Öffnungsabschnitt (28) des Abschlussmoduls (1.4) über einen elastisch verformbaren, langgestreckten Verbindungsabschnitt (32), welcher bevorzugt U-förmig und/oder mäanderförmig ausgebildet ist, an einer Grundplatte (33) des Abschlussmoduls (1.4) festgelegt ist.

11. Beleuchtungsanordnung nach einem der Ansprüche 1 bis 10, **dadurch gekennzeichnet, dass** an gegenüberliegenden Stirnseiten des Aufnahmekorbs (9) eine Mehrzahl von seitlich nach innen abragenden Stützarmen (19, 19.1, 19.2) zum Positionieren und/oder Fixieren des ersten Ferritkerns (5) ausgebildet sind.

12. Beleuchtungsanordnung nach Anspruch 11, **dadurch gekennzeichnet, dass** der erste Ferritkern (5) segmentiert ausgebildet ist und dass wenigstens einzelne Stützarme (19.1, 19.2) des Aufnahmekorbs (9) elastisch ausgebildet sind derart, dass die in dem Aufnahmekorb (9) vorgesehenen Ferritkernsegmente (5.1, 5.2, 5.3, 5.4) stirnseitig gegeneinander angedrückt sind.

## Claims

1. Lighting arrangement for airports, in particular an inpavement light, with a multi-part housing (1) comprising
- a receiving module (1.2) which is configured to receive a power supply module (3) and/or an illuminant,
- a carrier module (1.3) and
- a cover module (1.4) in any case partially overlapping the power supply module (3), which cover module is detachably connected to the carrier module (1.3),
wherein the power supply module (3) provides at least one induction coil (6), which is assigned to the electrical conductor (4) in such a way that during the operation, a voltage is induced in the induction coil (6) to operate a illuminant of the lighting arrangement, and
wherein at least a first ferrite core (5) and at least a second ferrite core (7) are provided as part of the power supply module (3), which together encompass the induction coil (5) in any case partially and an electrical conductor (4) for the power supply on its shell-side at least partially,
**characterized in that**
a receiving cage (9) is provided for the first ferrite core (5) and for the second ferrite core (7) which in a mounted state of the lighting arrangement encompasses the first ferrite core (5) and the second ferrite core (7) and is in any case partially configured resilient, such that the first ferrite core (5) and the second ferrite core (7) are pressed against each other and are detachably connected.

2. Lighting arrangement according to claim 1, **characterized in that**
the receiving cage (9) is formed in a U-shape with respect to two mutually opposite side flanks (13, 14) and a vertex bottom side (15) connecting the side flanks (13, 14), which is configured resilient.

3. Lighting arrangement according to claim 2, **characterized in that**
at least one gripping arm (17) protrudes from each side flank (13, 14) in the direction to the opposite side flank (13, 14), wherein the gripping arms (17) lie opposite to the resiliently configured vertex bottom side (15) in such a way that the ferrite cores (5, 7) encompassed by the receiving cage (9) are pressed against the opposing gripping arms (17) by the resiliently configured vertex bottom side (15).

4. Lighting arrangement according to one of claims 1 to 3, **characterized in that** latching detents (18) are formed at the receiving cage (9), which in the mounted state of the lighting arrangement engage in an insertion opening (10) provided on the receiving module (1.2) for fixing the receiving cage (9) on the receiving module (1.2).

5. Lighting arrangement according to claim 4, **characterized in that** latching hooks (21) are provided on the support module (1.3) which in the mounted state engage with the insertion openings (10) provided on the receiving module (1.2) for fixing the support module (1.3) on the receiving module (1.2).

6. Lighting arrangement according to one of claims 1 to 5, **characterized in that** the second ferrite core (7) is held by the cover module (1.4).

7. Lighting arrangement according to claim 6, **characterized in that**
at least one spreading edge (26) is formed on each of the side edges (13, 14) of the receiving cage (9), which, when attaching the cover module (1.4) to the receiving module (1.2), interacts with first effective wedge surfaces (25) formed at the cover module (1.4) in such a way that the opposing side surfaces with the gripping hooks formed thereon are bent elastically outward, for inserting the second ferrite core (7) being held on the cover module (1.4) in the receiving cage (9).

8. Lighting arrangement according to claim 7, **characterized in that**
the cover module (1.4) has at least two latching arms (24) on which the first effective wedge surfaces (25) are formed, and that the latching arms (24) in the mounted state of the lighting arrangement encompass the spreading edges (26) formed on the receiving cage (9) in such a way that the cover module (1.4) is fixed on the receiving cage (9) and thus indirectly on the receiving module (1.2).

9. Lighting arrangement according to one of claims 2 to 8, **characterized in that**
at least one spreading surface (31) is provided at each of the end faces of the mutually opposing side edges (13, 14), which in the mounted state of the lighting arrangement are assigned to a movably arranged opening portion (28) of the cover module (1.4), and that the opening portion (28) provides at least one second effective wedge surface being assigned to the spreading surface (31), respectively, such that by displacing the opening portion (28), the second effective wedge surface (30) is pressed against the spreading surface (31) and the side flanks (13, 14) of the receiving cage (9) with the gripping arms (17) are elastically bent outward such that at least the second ferrite core (7) and/or the cover module (1.4) can be removed from the receiving cage (9).

10. Lighting arrangement according to claim 9, **characterized in that**
the opening portion (28) of the cover module (1.4) is fixed to a base plate (33) of the cover module (1.4) via an elastically deformable, elongated connecting portion (32), which is preferably U-shaped and/or meander-shaped.

11. Lighting arrangement according to one of claims 1 to 10, **characterized in that**
at opposing end faces of the receiving cage (9) a plurality of support arms (19, 19.1, 19.2) laterally projecting inwards are formed for positioning and/or fixing of the first ferrite core (5).

12. Lighting arrangement according to claim 11, **characterized in that**
the first ferrite core (5) is formed segmented and that at least individual support arms (19.1, 19.2) of the receiving cage (9) are formed elastically such that ferrite core segments (5.1, 5.2, 5.3, 5.4) provided in the receiving cage (9) are pressed against each other with their end faces.

## Revendications

1. Dispositif d'éclairage pour aéroports, en particulier balise encastrée, avec un boîtier (1) en plusieurs parties, comprenant :
- un module de logement (1.2) conçu pour loger un module d'alimentation en énergie (3) et/ou une lampe,
- un module de support (1.3) et
- un module de fermeture (1.4) qui couvre au moins en partie le module d'alimentation en énergie (3) et qui est assemblé de façon amovible avec le module de support (1.3),
dans lequel le module d'alimentation en énergie (3) comprend au moins une bobine d'induction (6) qui est associée au conducteur électrique (4) de telle manière que, pendant le fonctionnement, une tension soit induite dans la bobine d'induction (6) pour faire fonctionner une lampe du dispositif d'éclairage, et dans lequel font partie du module d'alimentation en énergie (3) au moins un premier tore de ferrite (5) et au moins un deuxième tore de ferrite (7) qui entourent ensemble comme une chemise, en partie dans tous les cas, la bobine d'induction (5) et, au moins en partie, un conducteur électrique (4) pour l'alimentation électrique, **caractérisé en ce qu'**un panier de logement (9) est prévu pour le premier tore de ferrite (5) et pour le deuxième tore de ferrite (7) et entoure, quand le dispositif d'éclairage est dans l'état monté, le premier tore de ferrite (5) et le deuxième tore de ferrite (7), qui est au moins en partie conçu de façon élastique de sorte que le premier tore de ferrite (5) et le deuxième tore de ferrite (7) sont pressés l'un vers l'autre enfoncés et reliés l'un à l'autre d'une façon pouvant être défaite.

2. Dispositif d'éclairage selon la revendication 1, **caractérisé en ce que** le panier de logement (9) est en forme de U en relation avec deux flancs latéraux (13, 14) qui se font face et un côté inférieur de sommet (15) élastique qui relie les flancs latéraux (13, 14).

3. Dispositif d'éclairage selon la revendication 2, **caractérisé en ce qu'**au moins un bras de préhension (17) dépasse de chaque flanc latéral (13, 14) en direction du flanc latéral (13, 14) opposé, les bras de préhension (17) faisant face au côté inférieur de sommet (15) élastique de telle manière que les tores de ferrite (5, 7) entourés par le panier de logement (9) soient pressés par la face inférieure (15) élastique contre les bras de préhension (17) opposés.

4. Dispositif d'éclairage selon l'une des revendications 1 à 3, **caractérisé en ce que** sont formés sur le panier de logement (9) des ergots d'enclenchement (18) qui se mettent en prise, quand le dispositif d'éclairage est dans l'état monté, dans une ouverture d'insertion (10) prévue sur le module de logement (1.2) afin de fixer le panier de logement (9) sur le module de logement (1.2).

5. Dispositif d'éclairage selon la revendication 4, **caractérisé en ce que** sont prévus sur le module de support (1.3) des crochets d'enclenchement (21) qui se mettent en prise, dans l'état monté, dans les ouvertures d'insertion (10) prévues sur le module de logement (1.2) afin de fixer le module de support (1.3) sur le module de logement (1.2).

6. Dispositif d'éclairage selon l'une des revendications 1 à 5, **caractérisé en ce que** le deuxième tore de ferrite (7) est retenu par le module de fermeture (1.4).

7. Dispositif d'éclairage selon la revendication 6, **caractérisé en ce qu'**est prévu sur chacun des flancs latéraux (13, 14) du panier de logement (9) au moins un bord d'écartement (26) qui coopère, lorsque le module de fermeture (1.4) est posé sur le module de logement (1.2), avec des surfaces actives en coin (25) formées sur le module de fermeture (1.4), de telle manière que les surfaces latérales opposées soient recourbées de façon élastique vers l'extérieur avec les crochets de préhension posés dessus afin d'insérer le deuxième tore de ferrite (7) retenu sur le module de fermeture (1.4) dans le panier de logement (9).

8. Dispositif d'éclairage selon la revendication 7, **caractérisé en ce que** le module de fermeture (1.4) présente au moins deux bras d'engagement (24) sur lesquels les premières surfaces actives en coin (25) sont formées et **en ce que** les bras d'engagement (24) entourent les bords d'écartement (26) formés sur le panier de logement (9) quand le dispositif d'éclairage est dans l'état monté, de telle manière que le module de fermeture (1.4) soit fixé sur le panier de logement (9) et ainsi, indirectement, sur le module de logement (1.2).

9. Dispositif d'éclairage selon l'une des revendications 2 à 8, **caractérisé en ce qu'**est prévue sur la face frontale de chacun des flancs latéraux (13, 14) qui se font face au moins une surface d'écartement (31) qui est associée, quand le dispositif d'éclairage est dans l'état monté, à une partie d'ouverture (28) mobile du module de fermeture (1.4) et **en ce que** chaque partie d'ouverture (28) comporte au moins une deuxième surface active en coin associée à une des surfaces d'écartement (31), de telle manière qu'une translation de la partie d'ouverture (28) presse la deuxième surface active en coin (30) contre la surface d'écartement (31) et que les flancs latéraux (13, 14) du panier de logement (9) soient courbés de façon élastique vers l'extérieur avec les bras de préhension (17) de telle manière qu'au moins le deuxième tore de ferrite (7) et/ou le module de fermeture (1.4) puissent être retirés du panier de logement (9).

10. Dispositif d'éclairage selon la revendication 9, **caractérisé en ce que** la partie d'ouverture (28) du module de fermeture (1.4) est fixée sur une plaque de base (33) du module de fermeture (1.4) par une partie de liaison allongée (32) capable de déformation élastique, qui est de préférence en forme de U et/ou sinueuse.

11. Dispositif d'éclairage selon l'une des revendications 1 à 10, **caractérisé en ce que** sont formés sur des faces frontales opposées du panier de logement (9) plusieurs bras de support (19, 19.1, 19.2) dépassant vers l'intérieur pour le positionnement et/ou la fixation du premier tore de ferrite (5).

12. Dispositif d'éclairage selon la revendication 11, **caractérisé en ce que** le premier tore de ferrite (5) est segmenté et **en ce qu'**au moins certains bras de support (19.1, 19.2) du panier de logement (9) sont élastiques de telle façon que les segments de tore de ferrite (5.1, 5.2, 5.3, 5.4) prévus dans le panier de logement (9) sont pressés les uns contre les autres sur la face frontale.
